# EUROPÄISCHE PATENTANMELDUNG

(11) **EP 2 781 867 A1**
(43) Veröffentlichungstag der Anmeldung: **24.09.2014**
(21) Anmeldenummer: 13160411.8
(22) Anmeldetag: 21.03.2013
(51) Int. Cl.: F27B 3/18, C21C 5/56, F27D 13/00

(54) **Fixiervorrichtung für in einen metallurgischen Schmelzbehälter zu chargierenden Stahlschrott sowie Vorwärmvorrichtung**

(71) Anmelder: Siemens VAI Metals Technologies GmbH, 4031 Linz (AT)
(72) Erfinder: Dorndorf, Markus, 76534 Baden-Baden (DE); Krüger, Klaus, 22179 Hamburg (DE)
(74) Vertreter: Maier, Daniel Oliver

(57) **Zusammenfassung**

Die Erfindung betrifft eine Fixiervorrichtung (2) für in einen metallurgischen Schmelzbehälter (4) zu chargierenden Stahlschrott (6), mit einem von einer Gehäusewand (10) umgebenen, zur Aufnahme des Stahlschrotts (6) dienenden vertikalen Schacht (8) und mindestens einem an dem Schacht (8) angeordneten Magneten (12), mit dem der Stahlschrott (6) innerhalb des Schachts (8) fixierbar ist. Außerdem betrifft die Erfindung eine Vorwärmvorrichtung (1) mit einer erfindungsgemäßen Fixiervorrichtung (2).

## Beschreibung

Die Erfindung betrifft eine Fixiervorrichtung für in einen metallurgischen Schmelzbehälter zu chargierenden Stahlschrott und eine Vorwärmvorrichtung. Eine derartige Fixiervorrichtung umfasst einen von einer Gehäusewand umgebenen, zur Aufnahme des Stahlschrotts dienenden vertikalen Schacht sowie ein Rückhaltesystem, welches einerseits den Schrott beispielsweise für die Vorwärmung in relativem Abstand zur Wärmequelle hält und andererseits die Leitung des Abgasstromes durch den Schrott beispielsweise im Schacht gewährleistet. Diese Rückhaltesysteme sind als Verbindungselement zwischen Schrottzufuhr und Schmelzprozess extrem performance- bzw. prozessrelevant. Gleichzeitig unterliegen sie einer hohen mechanischen und thermischen Beanspruchung und somit einem hohen Verschleiß bzw. hohem Wartungsaufwand. Bei derzeitigen Rückhaltesystemen sind mechanische Barrieren, wie beispielsweise sogenannte Finger, am unteren Ende des Schachtes derart platziert, dass der Schrott oberhalb des Stahlbades gehalten wird. Diese Finger sind weiterhin derart angeordnet, dass ausreichend Prozessgas die Finger sowie den Schrott im Schacht durchdringen kann, da der Schacht gleichzeitig einen verlängerten Abgaskrümmer eines konventionellen Ofens darstellt. Die Finger können dabei einseitig oder beidseitig klappbar oder einseitig oder beidseitig einschieb- bzw. schwenkbar im Schachtbereich installiert sein. Die Fingersowie die Wandelemente des Schachtes sind wassergekühlt, um der hohen thermischen Belastung zu widerstehen.

Des Weiteren sind die Finger derart konstruiert, dass sie die mechanischen Belastungen bzw. großen kinetischen Energien auf Grund des Chargierens des Schrottes auf die Finger abfangen können. Die Finger müssen während des gesamten Vorwärmprozesses in ihrer geschlossenen Position im Abgasstrom verbleiben, da sie als einzig verfügbares Rückhaltesystem fungieren. Rund 25 % der zugeführten Energie werden bei der Stahlerzeugung im Lichtbogenofen über das Abgas abgeführt. Die Forderung nach einer Steigerung der Energieeffizienz macht es erforderlich, diesen dominierenden Teil der Verluste in geeigneter Weise zu nutzen. Ein zielführender Ansatz besteht darin, mit dem Abgas den Schrott bzw. generell das Einsatzgut vorzuwärmen. Als besonders effizient erweist sich hier die Vorwärmung in dem Schacht. Bei der Vorwärmung im Schacht wird der Schrott portionsweise in einen vom Abgas durchströmten Schacht chargiert. Nach einer gewissen Haltezeit wird der nun vorgewärmte Schrott vollständig in den Schmelzbehälter entleert. Dies geschieht durch Öffnen des Rückhaltesystems z.B. Finger, am unteren Ende des Schachtes. Der zugehörige Zeitpunkt ergibt sich aus dem Prozessfortschritt respektive der Temperatur des im Ofen befindlichen Schmelzbades. Das Entleeren des Schachtinhaltes in den Schmelzbehälter beinhaltet erhebliches Optimierungspotential. Wünschenswert wäre es bereits sehr heiße Schrottteile frühzeitig vom Schacht in den Schmelzbehälter weiter zu befördern und insbesondere den Schrott in kleineren Portionen vom Schacht in das Schmelzbehälter zu chargieren, um dort eine Störung des Flüssigbadprozesses weitgehend zu vermeiden und somit keinen dominanten "cold spot" zu bilden.

Es ist daher Aufgabe der vorliegenden Erfindung eine Fixiervorrichtung und eine Vorwärmvorrichtung anzugeben, die hinsichtlich der oben genannten Gesichtspunkte verbessert sind.

Erfindungsgemäß wird diese Aufgabe gelöst durch eine Fixiereinrichtung für in einen metallurgischen Schmelzbehälter zu chargierenden Stahlschrott mit den Merkmalen des Patentanspruches 1 und durch eine Vorwärmvorrichtung mit den Merkmalen des Patentanspruches 9.

Demnach umfasst die Fixiervorrichtung einen von einer Gehäusewand umgebenden, zur Aufnahme des Stahlschrottes dienenden vertikalen Schacht und mindestens einen an den Schacht angeordneten Magneten, mit dem der Stahlschrott innerhalb des Schachtes fixierbar ist.

Grundlegende Idee der Erfindung ist es daher, den Stahlschrott magnetisch innerhalb des Schachtes zu fixieren. Mit anderen Worten: Als Rückhaltesystem fungiert ein Magnet. Mit Hilfe des damit erzeugten magnetischen Flusses bzw. Magnetfeldes wird eine Haltekraft erzeugt, mit der der Stahlschrott innerhalb des Schachtes fixiert und somit vorgewärmt werden kann.

Liegt ferromagnetisches Einsatzgut (d.h. kein austenitischer Rostfreistahl) vor, so lässt sich dieses in einer bevorzugten Ausführungsform über Elektromagnete fixieren. Da Elektromagnete aktivierbar und deaktivierbar sind, kann somit das Magnetfeld zu einem gewünschten Zeitpunkt aus- bzw. eingeschaltet werden, je nachdem, ob Stahlschrott in dem Schacht fixiert oder zum Chargieren freigegeben werden soll. Zu beachten ist, dass oberhalb der Curie-Temperatur ferromagnetische Materialien in eine paramagnetische Form übergehen, womit die Haltekraft verloren geht. Für Eisen liegt die Curie-Temperatur bei 768°C, für entsprechende Stähle in einem ähnlichen Bereich. Bezüglich der Fixierung im Schacht stellt dieser Effekt kein Hindernis dar. Es ist durchaus wünschenswert, wenn entsprechend vorgewärmter Schrott sich löst und in den Schmelzbehälter fällt. Für die Fixierung im Schacht bieten sich Kerne in C- und E-Form sowie entsprechende Varianten an. Prinzipiell können die zugehörigen Wicklungen in Kupfer ausgeführt werden, üblicherweise kommen aus Kostengründen jedoch auch Aluminiumbänder zum Einsatz. Bezüglich der Energieversorgung bietet sich Gleichstrom an. Da hier weder Wirbelstromverluste noch Skineffekt auftreten, sind die zugehörigen elektrischen Verluste deutlich geringer als beim Betrieb mit Wechselstrom. Weiterhin kann auf den Einsatz von geblechten Kernen bzw. Transformatorblech verzichtet werden.

Bei einer bevorzugten Ausgestaltung der Erfindung ist der Magnet außen an der Gehäusewand des Schachtes fixiert. Bei einer derartigen Anordnung wird durch den Magneten den Querschnitt des Schachtes nicht verringert. Zur erfolgreichen magnetischen Fixierung des Stahlschrotts innerhalb des Schachtes muss der magnetische Fluss vom Magneten möglichst vollständig in Richtung Schrott gelangen und somit durch die Gehäusewand des Schachtes dringen. Dies gelingt nur, wenn die Schachtkonstruktion keinen ferromagnetischen Stahl enthält. Außerhalb bzw. deutlich ober- oder unterhalb des Schachtes kann ferromagnetischer Stahl hingegen uneingeschränkt verwendet werden.

Bei einer weiteren bevorzugten Ausgestaltung der Erfindung sind mehrere Magnete an dem Schacht angeordnet, so dass ein entsprechend größeres und stärkeres Magnetfeld erzielt wird. Damit gelingt es größere bzw. mehrere Portionen von Stahlschrott innerhalb des Schachtes zu fixieren. Die einzelnen Magnete können auch unabhängig voneinander angesteuert und somit an- oder abgeschaltet werden, so dass ein für den jeweiligen Fall benötigtes Magnetfeld mit gewünschter Stärke bzw. Geometrie erzeugt wird.

Werden mehrere Magnete in einer zum Schacht horizontalen Ebene angeordnet, so kann der magnetische Fluss von den Magneten nahezu vollständig und auf energetisch besonders günstige Art und Weise in Richtung des Schrottes gelangen.

Sind mehrere Magnete jeweils in mehreren vertikal beabstandeten horizontalen Ebenen angeordnet, so können durch eine entsprechende Ansteuerung der Magnete der unterschiedlichen Ebenen mehrere Portionen von Stahlschrott in einer unterschiedlichen Dauer im Schacht fixiert werden. Prinzipiell ist es sogar möglich, das gesamte Schrottaufwerk im Schacht, entsprechend eines Linearmotors, um eine jeweilige Ebene nach unten zu versetzen. In diesem Zusammenhang wäre es auch denkbar in den Schacht von oben Schrott mittels eines Förderbandes kontinuierlich nachzufördern.

Um eine optimale Fixierung des Stahlschrottes innerhalb des Schachtes zu ermöglichen, ist zusätzlich zu dem Magneten innerhalb des Schachtes ein mechanisches Rückhalteelement, welches bevorzugt durch Finger gebildet wird, angeordnet. Somit umfasst das Rückhaltesystem der Fixiervorrichtung neben dem Magnet auch ein mechanisches Rückhalteelement. Ein derartiges Rückhalteelement kann bei einer Kombination mit der magnetischen Komponente entgegen der aus dem Stand der Technik bekannten mechanischen Rückhalteelemente ungekühlt im Schacht verbleiben und kann daher sehr einfach konstruiert werden, da es lediglich bei Befüllen des Schachtes mit Stahlschrott und somit für eine kürzere Zeitdauer gebraucht wird. Nach diesem Vorgang erfolgt die Fixierung des Stahlschrotts ausschließlich durch den Magneten. Dadurch reduziert sich auch der Wartungsaufwand des mechanischen Rückhalteelementes. Des Weiteren wird die thermische Belastung des Ofenequipments reduziert und die Gehäusewände des Schachtes werden verstärkt thermisch abgeschirmt.

Außerdem wird durch die erfindungsgemäße Ausgestaltung die Möglichkeit für eine sukzessive Chargierung des Schrottes in den Schmelzbehälter erzielt, wodurch eine weitere Schonung der verwendeten Anlagenteile erfolgt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Für eine weitere Beschreibung der Erfindung wird auf die Ausführungsbeispiele der Zeichnungen verwiesen. Es zeigen jeweils in einer schematischen Prinzipskizze:
- FIG 1: eine Seitenansicht einer erfindungsgemäßen Vorwärm-und Fixiervorrichtung mit einem Schmelzbehälter,
- FIG 2: eine weitere Seiteneinsicht einer erfindungsgemäßen Vorwärm- und Fixiervorrichtung,
- FIG 3: einen Magneten,
- FIG 4: ein Diagramm mit der Kraftwirkung eines Magneten in Abhängigkeit des Luftspalts,
- FIG 5: einen Magneten mit dargestellter Magnetkraft und Haftreibungskraft,
- FIG 6: eine Fixiervorrichtung mit deaktivierten Magnetfeld,
- FIG 7: eine Fixiervorrichtung mit aktivierten Magnetfeld.

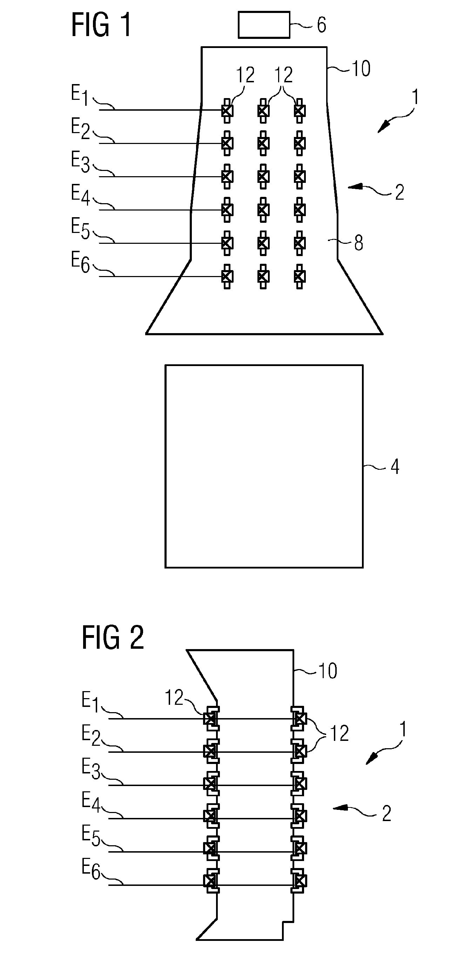

FIG 1 zeigt eine Vorwärmvorrichtung 1 mit einer Fixiervorrichtung 2 für in einen metallurgischen Schmelzbehälter 4 zu chargierenden Stahlschrott 6. Die Fixiervorrichtung 2 umfasst einen vertikalen Schacht 8 zur Aufnahme des Stahlschrotts 6, welcher von einer Gehäusewand 10 umgeben ist.

Wie aus FIG 1 und FIG 2 zu entnehmen ist, sind außen an der Gehäusewand 10 mehrere Magnete 12 fixiert. Mit Hilfe dieser Magnete 12 kann der Stahlschrott 6 innerhalb des Schachts 8 fixiert werden, so dass dieser durch aus dem Schmelzbehälter 4 aufsteigende Gase erwärmt werden kann.

Insgesamt sind in der in FIG 1 und FIG 2 gezeigten Ausführungsform sechsunddreißig Magnete 12 an der Gehäusewand 10 fixiert. Dabei sind jeweils drei Magnete 12 in einer horizontalen Ebene E₁ an einem Abschnitt der Gehäusewand 10 und weitere drei Magnete 12 an einem gegenüberliegenden Abschnitt der Gehäusewand 10 in der gleichen Ebene E₁ angeordnet, so dass sich somit sechs Magnete 12 in der Ebene E₁ befinden. Auf entsprechende Art und Weise sind jeweils weitere sechs Magnete 12 in weiteren fünf horizontalen Ebenen E₂ bis E₆ angeordnet, die jeweils vertikal untereinander beabstandet sind. Insgesamt umfasst also die Fixiervorrichtung 2 6 x 6 = 36 Magnete 12.

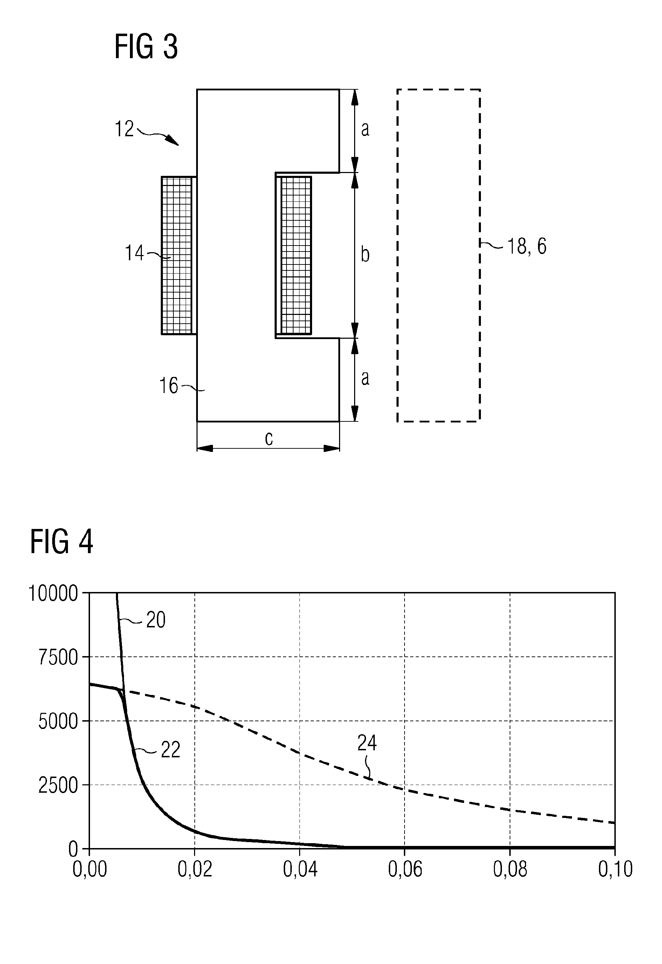

In FIG 3 ist nun einer der in FIG 1 bzw. FIG 2 skizzierten Magnete 12 genauer dargestellt. Es handelt sich dabei um einen Elektromagneten mit einer Spule 14 und einem C-förmigen Magnetkern 16. Die in der Figur dargestellten Abmessungen betragen a = 200 mm, b = 400 mm, c = 350 mm. Die nicht dargestellte Jochstärke d beträgt 250 mm. Die Masse des Kerns beträgt 430 kg. Es wird ein weichmagnetischer Magnetkern 16 verwendet mit einer Permeabilität µᵣ von 2000 (bei einer magnetischen Feldstärke von A/m). Die Spule umfasst 1000 Windungen aus Aluminiumband (Querschnitt: 4 mm²), der zugehörige elektrische Widerstand beträgt 8 Q. Der Magnet 12 wird mit 20 A Gleichstrom betrieben. Aus diesen Daten ergibt sich eine elektrische Wirkleistung von 4 kW, ein Wert, der angesichts einer typischen Abgasleistung im Schacht 8 von 30 MW und mehr kaum ins Gewicht fällt. Der Magnetkern 16 wird geschlossen durch das Joch 18, welches durch den zu wärmenden Stahlschrott 6 im Schacht 8 gebildet wird.

Rein rechnerisch beträgt die Flussdichte im geschlossenen Magnetkern 16 mit Joch 18 bzw. Stahlschrott 6 rund 29 T, ein Wert der tatsächlich nicht erreicht wird, da die Sättigungsflussdichte in weichmagnetischem Stahl ca. 1,8 T beträgt. Dies wird im Folgenden berücksichtigt. Die magnetische Flussdichte (genauer die Änderung der magnetischen Flussdichte) am Übergang zum Werkstück, hier Stahlschrott 6 bestimmt die magnetische Kraftwirkung. Zwei Effekte bewirken, dass die magnetische Kraftwirkung sehr schnell mit zunehmender Breite des zugehörigen Luftspalts abklingt:

Die Kraftwirkung ist proportional zum Quadrat der magnetischen Flussdichte und die magnetische Flussdichte nimmt annähernd hyperbelförmig, (d - L_{fe}/µr)⁻¹, mit der Jochstärke d ab, sobald die Sättigungsflussdichte im Magnetkern 16 und im Stahlschrott 6 unterschritten ist. Die magnetische Flussdichte im Joch 18 bzw. Stahlschrott 6 hängt neben dem vom Magneten 12 verursachten Fluss von der Querschnittsfläche des Jochs 18 ab. Sie ist zu dieser umgekehrt proportional. Somit kann bei gleicher Fläche auf ein dünnes Joch 18 eine größere Kraft wirken als auf ein dickes Joch 18.

In FIG 4 ist nun der Zusammenhang zwischen der Luftspaltbreite sowie der Magnetkraft dargestellt. Dabei ist in X-Richtung der Luftspalt in Metern angegeben, in Y-Richtung die Kraft in daN. In Kurve 20 ist der Zusammenhang ohne Sättigung dargestellt. In Kurve 24 bei einem Joch 18 mit 250 mm und in Kurve 24 auf ein Joch mit 25 mm Blechstärke. Aus der Sättigung resultiert der zunächst flache Abfall (hierin ist begründet, warum eine magnetische Feldstärke oberhalb der Sättigung gewählt wurde), nach Unterschreiten der Sättigung folgt die steile, hyperbelförmige Abnahme der Kraftwirkung.

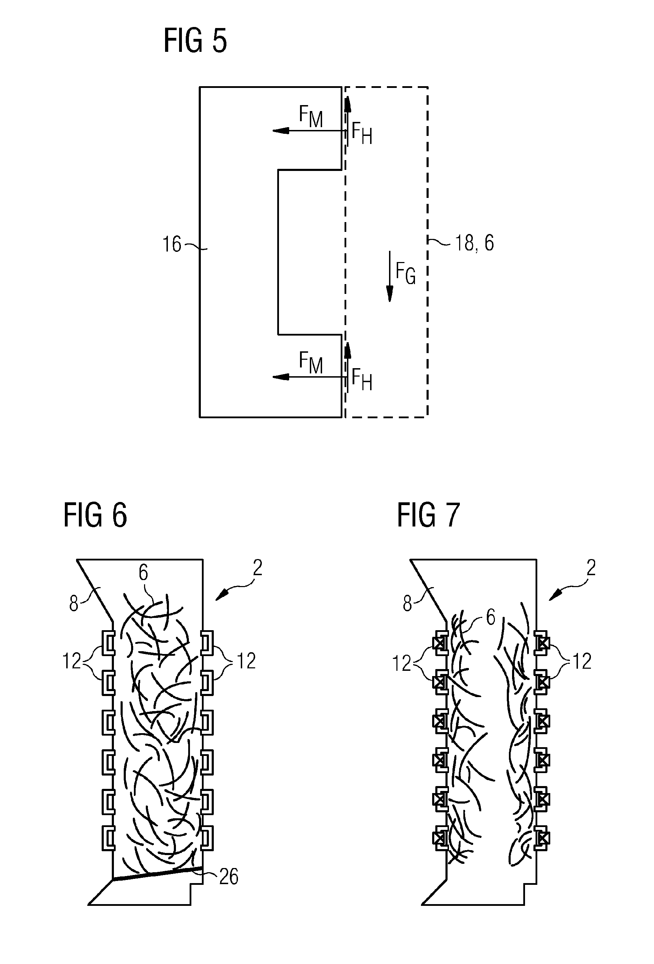

FIG 5 zeigt nun den Magnetkern 16 mit dem aus dem Stahlschrott 6 gebildeten Joch 18. Es lässt sich bei den betrachteten Verhältnissen eine Kraftwirkung von etwa 6450 daN erzielen. Die Kraft F_{M} ist direkt proportional zum Querschnitt des Magnetkerns 16, d.h. eine Verdopplung des Querschnittes bewirkt bei gleicher elektrischer Auslegung eine Verdopplung der Kraftwirkung. Erfahrungsgemäß lassen sich zwei aneinander haftende, starke Magnete 12 nicht auseinanderziehen, wohl aber durch verschieben voneinander trennen. Entsprechend gilt auch die berechnete Kraftwirkung nur für die orthogonal wirkende Kraft F_{M}. Die tangential wirkende Haftreibungskraft F_{H} ergibt sich aus dem Produkt aus Magnetkraft F_{M} und Haftreibungszahl. Auf Grund der undefinierten Schrottkonsistenz lässt sich die Haftreibungszahl schwer abschätzen, sie wird in jedem Falle deutlich über 0,15 liegen. Damit erhält man im Falle des betrachteten Magneten 12 eine Haftreibungskraft F_{H} von mindestens 970 daN.

Bei der in FIG 1 und FIG 2 dargestellten Anordnung von sechsunddreißig Magneten 12 resultiert bei einem Wert von 0,2 für die Haftreibungszahl eine Haltekraft von 46400 daN, was ausreichend ist, um den Stahlschrott 6 im Schacht 8 zu halten. Jedoch lässt sich auch mittels der jeweils in einer horizontalen Ebene E₁ bis E₆ angeordneten Magnete 12 der in den Schacht 8 fallende Stahlschrott 6 nicht immer zuverlässig abbremsen und fixieren. Deswegen umfasst die in FIG 6 dargestellte Fixiervorrichtung 2 zusätzlich ein innerhalb des Schachts 8 an dessen unteren Ende angeordnetes mechanisches Rückhalteelement 26, welches im Ausführungsbeispiel aus Fingern gebildet wird. Beim Einfüllen des Stahlschrotts 6 in den Schacht 8 wird der Stahlschrott 6 zunächst durch das mechanische Rückhalteelement 26 im Schacht 8 abgebremst und fixiert. Um eine homogene Beladung des Schachts 8 mit Stahlschrott 6 zu erreichen und die mechanische Belastung der Gehäusewand 10 gering zu halten, sind die Magnete 12 während des Chargiervorgangs zweckmäßiger Weise abzuschalten. Eine derartige Situation ist in FIG 6 dargestellt.

Danach werden die Magnete 12 aktiviert, so dass der Stahlschrott 6 mittels Magnetkraft an der Gehäusewand 10 des Schachts fixiert und gehalten werden. Es bildet sich dadurch ein energetisch sehr effizienter Kamin. Das mechanische Rückhalteelement 26 kann nun geöffnet werden. Die Fixierung des Stahlschrotts 6 während des Vorwärmprozesses erfolgt dann ausschließlich mit Hilfe der Magnete 12, wie es in FIG 7 dargestellt ist. Das mechanische Rückhalteelement 26 ist ab diesem Zeitpunkt entbehrlich und wird aus dem Schacht 8 entfernt.

Im weiteren Verlauf des Prozesses wird sich Stahlschrott 6, welcher dann die Curie-Temperatur erreicht hat, lösen und in den Schmelzbehälter 4 fallen. Weiterhin kann durch selektives Abschalten einzelner Magnete 12 der vorgewärmte Stahlschrott 6 sektionsweise in den Schmelzbehälter 4 chargiert werden. Dies erscheint für die Prozessführung sehr vorteilhaft. Prinzipiell ist es sogar möglich, das gesamte Schrotthaufwerk im Schacht 8, entsprechend eines Linearmotors um eine Sektion, d.h. eine Ebene E nach unten zu versetzen. In diesem Zusammenhang wäre es auch denkbar, von oben Stahlschrott 6 mittels eines Förderbandes kontinuierlich in den Schacht 8 nachzufördern.

Prinzipiell wäre es denkbar, dass sich der verkeilte Stahlschrott 6 auf Grund einer verbleibenden Restmagnetisierung nicht aus dem Schacht löst. Dem kann durch ein kurzes Umpolen der Magnete 12 (bzw. der Stromrichtung) effizient entgegengewirkt werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Fixiervorrichtung (2) für in einen metallurgischen Schmelzbehälter (4) zu chargierenden Stahlschrott (6), mit einem von einer Gehäusewand (10) umgebenen, zur Aufnahme des Stahlschrotts (6) dienenden vertikalen Schacht (8) und mindestens einem an dem Schacht (8) angeordneten Magneten (12), mit dem der Stahlschrott (6) innerhalb des Schachts (8) fixierbar ist.

2. Fixiervorrichtung (2) nach Anspruch 1,
bei der der Magnet (12) außen an der Gehäusewand (10) fixiert ist.

3. Fixiervorrichtung (2) nach Anspruch 1 oder 2,
bei der mehrere Magnete (12) an dem Schacht (8) angeordnet sind.

4. Fixiervorrichtung (2) nach einem der vorhergehenden Ansprüche,
bei der ein oder mehrere Magnete (12) in einer horizontalen Ebene (E) angeordnet sind.

5. Fixiervorrichtung (2) nach einem der vorhergehenden Ansprüche,
bei der ein oder mehrere Magnete (12) jeweils in mehreren vertikal beabstandeten horizontalen Ebenen (E) angeordnet sind.

6. Fixiervorrichtung (2) nach einem der vorhergehenden Ansprüche,
bei der der Magnet (12) ein Elektromagnet ist.

7. Fixiervorrichtung (2) nach einem der vorhergehenden Ansprüche,
bei der innerhalb des Schachts (8) ein mechanisches Rückhalteelement (26) angeordnet ist.

8. Fixiervorrichtung (2) nach Anspruch 7,
bei der das Rückhalteelement (26) aus Fingern gebildet wird.

9. Vorwärmvorrichtung (1) mit einer Fixiervorrichtung (2) gemäß einem der Patentansprüche 1 bis 7.
